Europäisches Patentamt

European Patent Office

Office européen des brevets

(11) Veröffentlichungsnummer: **0 359 020**

**A1**

# (12) EUROPÄISCHE PATENTANMELDUNG

(21) Anmeldenummer: 89115866.9

(22) Anmeldetag: 29.08.89

(51) Int. Cl.5: **C01B 17/50 , C01B 17/16 , C01B 17/04 , C01B 17/74**

(30) Priorität: 02.09.88 DE 3829826

(43) Veröffentlichungstag der Anmeldung:
21.03.90 Patentblatt 90/12

(84) Benannte Vertragsstaaten:
**AT BE CH DE ES FR GB LI NL**

(71) Anmelder: **BASF Aktiengesellschaft**
**Carl-Bosch-Strasse 38**
**D-6700 Ludwigshafen(DE)**

(72) Erfinder: **Meyer, Hermann, Dr.**
**Philosophenplatz 5**
**D-6800 Mannheim 1(DE)**
Erfinder: **Roemer, Rainer, Dr.**
**Lessingstrasse 2**
**D-6947 Laudenbach(DE)**
Erfinder: **Pforr, Gerhard, Dr.**
**Kirchenstrasse 102**
**D-6700 Ludwigshafen(DE)**

(54) **Verfahren zur Aufarbeitung von natriumsulfathaltigen Rückständen.**

(57) Die Anmeldung betrifft ein Verfahren zur Aufarbeitung von natriumsulfathaltigen Rückständen durch Reduktion des Sulfates, bei dem man das Sulfat oder Mischungen oder Lösungen des Sulfates auf Temperaturen über 1000 °C, insbesondere über 1 200 °C unter reduzierenden Bedingungen thermisch zu gasförmigen Sulfiden und Schwefeloxiden sowie alkalischer Schlacke spaltet. Die in den gasförmigen Reaktionsprodukten enthaltenen Schwefelverbindungen können zu Schwefel, Schwefeldioxid und Schwefelsäure weiterverarbeitet werden.

EP 0 359 020 A1

## Verfahren zur Aufarbeitung von natriumsulfathaltigen Rückständen

Vorliegende Erfindung betrifft ein Verfahren zur Aufarbeitung sulfathaltiger Rückstände durch Reduktion der Sulfate

Bei zahlreichen groptechnischen Verfahren, beispielsweise in der Papierindustrie, der chemischen Industrie und neuerdings auch bei Rauchgasentschwefelungsanlagen entstehen Abwässer, die u.a. Sulfate in gelöster Form, z.B. Natriumsulfat, enthalten. Diese Abwässer werden z.Z. in vielen Fällen noch ungeklärt in Flüsse eingeleitet, teilweise zu deponierbaren Rückständen aufkonzentriert oder nach zusätzlichen Reinigungsverfahren zu reinem Natriumsulfat aufgearbeitet.

Das aus Abwässern gewinnbare Natriumsulfat ist im allgemeinen aufwendiger herzustellen als das beispielsweise aus Glauberit oder Solen von Salzseen durch bekannte Verfahren gewonnene Natriumsulfat. Recycling von Natriumsulfat scheiterte vielfach an technischen Problemen.

Eine weitere Möglichkeit zur Aufarbeitung von Natriumsulfat bietet die Elektrolyse im Schmelzfluß oder in wäßriger Lösung. Die bekannten chemischen Verfahren sind noch nicht zur technischen Reife entwickelt. Für die Elektrolyse werden aber hochreine wäßrige Lösungen benötigt.

Technische Verfahren zur Reduktion von Natriumsulfat mit Kohle sind seit langem bekannt. Auch Verfahren zur Reduktion mit Wasserstoff wurden untersucht. Ebenso die Verwendung anderer Reduktionsmittel, beispielsweise Kohlenwasserstoffe oder Kohlenmonoxid, sind bereits beschrieben.

Die bekannten technischen Verfahren zur Reduktion von Natriumsulfat zu Natriumsulfid mit Kohle arbeiten im Temperaturbereich von etwa 600 bis 1 200° C, vorzugsweise bei etwa 700 bis 1 000° C. Das Natriumsulfat wird mit Kohle vermischt in Herd-, Schacht- oder Drehrohröfen bei etwa 700 bis 1 000° C zu einer Schmelze umgesetzt. Nachteile dieser Verfahren sind aufwendige, diskontinuierliche Verfahren zur Aufarbeitung der Schmelze und der gasförmigen Reaktionsprodukte.

Man hat deshalb auch schon versucht die Reduktion des Natriumsulfates mit Gasen, beispielsweise mit Wasserstoff im Drehrohr oder Wirbelbett bei Temperaturen von etwa 900° C durchzuführen. Die technische Ausführung dieser Verfahren wird erschwert durch Bildung eutektischer Gemische aus Natriumsulfat und dem Produkt Natriumsulfid, die bei den erforderlichen Reaktionstemperaturen schmelzflüssig vorliegen und die Reaktion beeinträchtigen.

Es war also die Aufgabe gestellt, ein Verfahren zur Aufarbeitung sulfathaltiger Rückstände durch Reduktion zu Sulfiden oder Schwefeloxiden, durch welches das Recycling des Schwefels ermöglicht wird, vorzugsweise zur Aufarbeitung von in Abwässern gelösten Natriumsulfaten bereitzustellen, bei dem die Nachteile der bekannten Verfahren nicht auftreten, d.h. zusätzliche Verfahrensstufen zur Reinigung und Aufkonzentration sulfathaltiger Abwässer, die Entstehung von Schmelzen, arbeitsintensive Gewinnung des schwefelhaltigen Wertproduktes aus der Schmelze und der Anfall schädlicher Abgase vermieden werden.

Es wurde nun gefunden, daß man natriumsulfathaltige Rückstände in Lösung oder flüssiger Form, durch Reduktion des Sulfates aufarbeiten kann, wenn man das Sulfat oder Mischungen oder Lösungen bei Temperaturen über 1000° C, insbesondere über 1 200° C, unter reduzierenden Bedingungen thermisch zu gasförmigen Sulfiden und Schwefeldioxiden sowie alkalischer Schlacke spaltet.

Die reduzierenden Bedingungen werden dadurch erreicht, daß man in die heiße Zone zusammen mit dem Sulfat Kohlenstaub, Schweröl, Erdgas und/oder Wasserstoff zuführt.

Das Verfahren ist insbesondere geeignet zur Aufarbeitung von natriumsulfathaltigen Abwässern und kann in geeigneten Kohlenstaub-, Schweröl-, Erdgas- oder Wasserstoffbrennern durchgeführt werden.

Man kann aber auch Rückstände, die andere Alkalisulfate oder Erdalkalisulfate oder Gemische dieser mit Natriumsulfat enthalten, aufarbeiten.

Zur Aufheizung sulfathaltiger Rückstände kann man in einem Raum, in dem Temperaturen über 1000° C insbesondere über 1 200° C durch ausreichend hohe Energiezufuhr aufrechterhalten werden, feste Rückstände pneumatisch einleiten oder Abwässer eindüsen. Die in den Raum hoher Energiedichte und Temperatur eingebrachten Stoffe werden thermisch zu gasförmigen Produkten und Alkalischlacke gespalten. So kann man überraschenderweise bei Temperaturen größer 1 500° C und bei geeigneter Wahl der Energieführung die schwefelhaltigen Spaltprodukte vollständig im gasförmigen Zustand erhalten und aus dem Reaktionsraum ausschleusen. Durch Zugabe reduzierender Komponenten z.B. Wasserstoff, Methan, Kohlenmonoxid und Kohlenstoff wird die Bildung von im Normalzustand gasförmigen Schwefelverbindungen, beispielsweise Schwefelwasserstoff und Kohlenoxidsulfid, gefördert. Das Verfahren kann bei normalem oder erhöhtem Druck z.B. bei 20 bis 40 bar ausgeführt werden.

Die Umsetzung verläuft besonders vorteilhaft, wenn das Reduktionsmittel silikathaltige Ballaststoffe, enthält oder man gleichzeitig mit dem Reduktionsmittel silikatische Zuschlagstoffe zusetzt. Durch

solche silikatische Verbindungen wird die Austreibung der schwefelhaltigen Gase und die Fließfähigkeit der abzuziehenden Schlacke u.a. günstig beeinflußt. Man erhält damit eine gut fließfähige Schlacke, die aus dem Brennraum ohne Schwierigkeiten abgezogen und nach dem Abschrecken in Wasser als silikatisches Baumaterial verwendet werden kann.

Die Vorteile des Verfahrens bestehen darin, daß die Aufarbeitung der sulfathaltigen Rückstände ohne Vorbehandlung kontinuierlich erfolgen kann, schädliche Abgase, sowie schädliche feste Rückstände nicht entstehen und aus den gebildeten gasförmigen Reaktionsprodukten, wie Sulfiden oder Schwefeloxiden nach bekannten Verfahren in einfacher Weise Schwefel, Schwefeldioxid und Schwefelsäure hergestellt werden können.

Beispiel 1

Eindüsung von natriumsulfathaltigem Abwasser in einen vertikalen Brenner für die Druckvergasung von Vakuumrückstand.

Durch Zugabe von Luft wird eine Reaktionstemperatur von 1200 °C bis 1500 °C erreicht. Im Reaktionsgas ist der Schwefel aus dem Sulfat zu 70 Vol.-% als $H_2S$ zu 20 vol.-% als $SO_2$ und zu 10 vol.-% als COS enthalten. Fester Rückstand wird als fließfähige Schlacke am Boden des Brennraumes abgezogen und mit Wasser abgeschreckt. Das Reaktionsgas wird in einem Dampfkessel unterfeuert, der mit einer Rauchgasreinigung zur Abtrennung von Schwefeldioxid ausgerüstet ist.

Beispiel 2

Die Versuchsdurchführung entspricht Beispiel 1. Der Vakuumrückstand wird durch Steinkohlenstaub ersetzt. Das Reaktionsgas enthält Schwefelwasserstoff und Kohlenoxidsulfid im vergleichbaren Verhältnis.

Beispiel 3

Eindüsung von sulfathaltigem Abwasser in einen Kohlenstaubbrenner für Druckvergasung zur Herstellung von Synthesegas.

Je nach Weiterverarbeitung des erzeugten Gases wird in dem Brenner ein Überdruck von 0 bis 30 bar eingestellt. Bei der gezielten Reduktion von Natriumsulfat beträgt der Druck 0,5 bar. Ballastkohlestaub wird mit Abwasser, das bis zu 60 % Natriumsulfat enthält, angemaischt. Die erhaltene Maische wird in den Brennraum eingedüst und Sauerstoff zur Verbrennung zugegeben. Die Reaktionstemperatur erreicht 1 300 bis 1 600 °C. Das Reaktionsgas besteht aus CO, $CO_2$, Wasserdampf, $H_2S$, COS und $SO_2$. Aus der silikatischen Gangart des Kohlenstaubes wird eine flüssige Schlacke gebildet, die aus dem vertikal angeordneten Brennraum abgezogen wird. Die Asche enthält neben Natriumsilikat Natriumcarbonat und geringe Mengen von Natriumschwefelverbindungen.

Ansprüche

1. Verfahren zur Aufarbeitung von natriumsulfathaltigen Rückständen durch Reduktion des Sulfates, dadurch gekennzeichnet, daß man das Sulfat oder Mischungen oder Lösungen des Sulfates bei Temperaturen über 1000 °C, insbesondere über 1 200 °C unter reduzierenden Bedingungen thermisch zu gasförmigen Sulfiden und Schwefeloxiden sowie alkalischer Schlacke spaltet.

2. Verfahren nach Anspruch 1, dadurch gekennzeichnet, daß man die Spaltung in Gegenwart von Kohlenstaub, Schweröl, Erdgas oder Wasserstoff oder deren Mischungen durchführt.

3. Verfahren nach Anspruch 1 und/oder 2, dadurch gekennzeichnet, daß man die in den gasförmigen Reaktionsprodukten enthaltenen Schwefelverbindungen zu Schwefel, Schwefeldioxid und Schwefelsäure weiterverarbeitet.

4. Verfahren nach Anspruch 1 und/oder 2, dadurch gekennzeichnet, daß man das erhaltene schwefelhaltige Reaktionsgas in einem Dampfkessel unterfeuert und das dabei entstehende $SO_2$ in einer nachgeschalteten regenerativen Rauchgaswäsche abtrennt und weiterverwendet.

5. Verfahren nach Anspruch 1 bis 4, dadurch gekennzeichnet, daß man die Spaltung in Gegenwart von silikatischen Zuschlagstoffen duchführt.

Europäisches Patentamt

# EUROPÄISCHER RECHERCHENBERICHT

Nummer der Anmeldung

EP 89 11 5866

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, Band 97, Nr. 24, 1982, Seite 130, Zusammenfassung Nr. 200305t, Columbus, Ohio, US; & SU-A-947 032 (NORTH-WESTERN CORRESPONDENCE POLYTECHNIC INSTITUTE) 30-07-1982 * Insgesamt * | 1,2 | C 01 B 17/50 C 01 B 17/16 C 01 B 17/04 C 01 B 17/74 |
| Y | IDEM --- | 3,4,5 | |
| Y | BE-A- 445 862 (ZELLWOLLE UND KUNSTSEIDE RING) * Anspruch 1 * --- | 3,4 | |
| Y | FR-A- 972 854 (SAINT GOBAIN) * Ansprüche 1,3; Seite 1, Absatz 3 * | 3,4 | |
| Y | --- | 5 | |
| A | EP-A-0 244 206 (BOC GROUP) * Ansprüche; Spalte 1, Absatz 1 * --- | | |
| A | CHEMICAL ABSTRACTS, Nr. 22, 1961, Zusammenfassung Nr. 25618c-e, Columbus, Ohio, US; V.V. URUSOV: "A thermographic study of simultaneous decomposition of CaSO4 and CaS into CaO, SO2 and S2 in the process of converting technical gypsum to sulfuric acid and lime", & GIPS I FOSFOGIPS, NAUCH.-INST. PO UDOBREN. I INSEKTOFUNGISIDAM, MOSCOW 1958, NO. 160, 126-37 * Insgesamt * ----- | 3 | RECHERCHIERTE SACHGEBIETE (Int. Cl.5) C 01 B 17/00 |

Der vorliegende Recherchenbericht wurde für alle Patentansprüche erstellt

| Recherchenort | Abschlußdatum der Recherche | Prüfer |
|---|---|---|
| DEN HAAG | 07-12-1989 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P0403)